# EUROPEAN PATENT APPLICATION

(11) **EP 3 588 053 A1**
(43) Date of publication of application: **01.01.2020**
(21) Application number: 18757576.6
(22) Date of filing: 22.02.2018
(51) Int. Cl.: G01N 1/44

(54) **SAMPLE ADDING SYSTEM FOR AUTOMATICALLY ADDING SPUTUM DIGESTION LIQUID**

(30) Priority: 23.02.2017 CN 201720166065 U
(71) Applicant: Autobio Diagnostics Co., Ltd., Zhengzhou, Henan 450016 (CN)
(72) Inventor: WANG, Zeyu, Zhengzhou Henan 450016 (CN); SUN, Wuju, Zhengzhou Henan 450016 (CN); QIN, Lei, Zhengzhou Henan 450016 (CN); YANG, Hongyun, Zhengzhou Henan 450016 (CN); WANG, Liying, Zhengzhou Henan 450016 (CN); QIN, Junling, Zhengzhou Henan 450016 (CN); FU, Guangyu, Zhengzhou Henan 450016 (CN); WU, Xuewei, Zhengzhou Henan 450016 (CN)
(74) Representative: Gulde & Partner
(86) International application number: PCT/CN2018/076950
(87) International publication number: WO 2018/153341

(57) **Abstract**

A sample adding system for automatically adding a sputum digestion liquid comprises a weighing device (1) provided with a weight sensor and a sample adding device. The sample adding device comprises a sputum digestion liquid reagent bottle (2). A liquid inlet of a sample adding tube (3) goes deep into the sputum digestion liquid reagent bottle (2), and a liquid outlet of the sample adding tube (3) extends to a position above the weighing device (1). A sample adding needle (4) is connected to the liquid outlet of the sample adding tube (3). The sample adding tube is equipped with a quantitative sample adding pump (5). A signal output end of the weight sensor is electrically connected to a signal input end of a single-chip microcomputer, and a control output end of the single-chip microcomputer is electrically connected to a control input end of the quantitative sample adding pump (5).

## Description

### BACKGROUND

### Technical Field

The invention relates to the technical field of specimen processing, in particular to a sample adding system for automatically adding sputum digestion liquid.

### Description of Related Art

Sputum is secretion of alveolar, bronchial and tracheal. Inspection of sputum has certain value for diagnosis, curative effect observation and prognosis of some respiratory system diseases, and has realistic clinical significance in the diagnosis and treatment of respiratory diseases. So far, sputum culture is still the most widely used, simple and convenient, economical and safe pathogenic diagnostic technology.

The obvious heterogeneity of sputum specimen and unevenness of the distribution concentration of bacteria and other components are factors that greatly affect the culture positive rate of actual pathogenic bacteria. At present, when a sputum specimen containing a large amount of mucus is collected from a clinical case, sputum pre-processing is usually performed, and the sputum pre-processing is performed by manually adding an equal amount of digestion liquid, and then to be incubated and placed for digestion or incubated and oscillated for digestion. In this manner, the sputum mash is digested into a liquid state from the jelly state, so that the bacteria in the sputum are more homogenized, and the bacteria is more likely to be scattered when the sputum is applied on the culture plate, thereby allowing the bacteria wrapped by the jelly-like sputum mesh to grow a single colony, so as to contribute to increase the culture positive rate of actual pathogenic bacteria. Currently, in the pre-processing process of sputum specimen, the addition of sputum digestion liquid and its addition amount are entirely completed through human labor. In that case, the addition amount of sputum digestion liquid is greatly affected by human factors, and the uniformity and standardization of the addition amount of sputum are difficult to be controlled.

### SUMMARY OF THE INVENTION

The purpose of the present invention is to provide a sample adding system for automatically adding sputum digestion liquid which automatically and accurately adds sputum digestion liquid for sputum digestion.

In order to achieve the above purpose, the present invention can adopt following technical solutions:

The sample adding system for automatically adding sputum digestion liquid of the present invention includes a weighing device with a weight sensor and a sample adding device. The sample adding device includes a sputum digestion liquid reagent bottle. A sample adding tube has a liquid inlet going deep into the sputum digestion liquid reagent bottle, and a liquid outlet extending to a position above the weighing device. A sample adding needle is connected to the liquid outlet of the sample adding tube; the sample adding tube is equipped with a quantitative sample adding pump. A signal output end of the weight sensor is electrically connected to a signal input end of a single-chip microcomputer, and a control output end of the single-chip microcomputer is electrically connected to a control input end of the quantitative sample adding pump.

The weighing device is a balance; and the quantitative sample adding pump may be a plunger pump, a peristaltic pump, a gear pump or a quantitative valve.

The sample adding needle is a steel needle or a Tip head.

The invention has the advantages of simple structure and convenient to operate. By weighing a weight of the sputum through the weighing device, a volume of the sputum is reflected from the weight, and then an addition amount of the sputum digestion liquid is standardized according to the volume reflected by the weight, thereby effectively solving the problem of inaccurate addition amount of sputum digestion liquid caused by humans' judgment in amount of sputum, and the purpose of automatically and accurately adding sputum digestion liquid for digesting sputum can be realized.

### BRIEF DESCRIPTION OF THE DRAWINGS

FIG. 1 is a schematic view of the structure of the present invention.
FIG. 2 is a block diagram of the circuit principle of the present invention.

### DESCRIPTION OF THE EMBODIMENTS

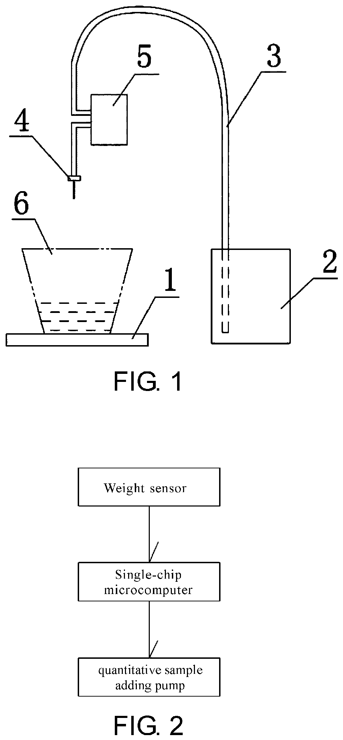

As shown in FIG. 1 and FIG. 2, a sample adding system for automatically adding sputum digestion liquid of the present invention includes a weighing device 1 with a weight sensor and a sample adding device. The sample adding device includes a sputum digestion liquid reagent bottle 2. A sample adding tube 3 has a liquid inlet going deep into the sputum digestion liquid reagent bottle 2, and a liquid outlet extending to a position above the weighing device 1. A sample adding needle 4 is connected to the liquid outlet of the sample adding tube 3, and the sample adding needle 6 may adopt a steel needle or a Tip head to ensure that an addition amount is more accurate. The sample adding tube is equipped with a quantitative sample adding pump 5. A signal output end of the weight sensor is electrically connected to a signal input end of a single-chip microcomputer, and a control output end of the single-chip microcomputer is electrically connected to a control input end of the quantitative sample adding pump 5.

In the actual implementation, the weighing device 1 can adopt a balance, and certainly, other weighing platforms can also be used. The quantitative sample adding pump 5 can adopt a plunger pump, a peristaltic pump, a gear pump or a quantitative valve.

When in use, a cup 6 containing the sputum is placed on the weighing device 1. The shape, size and color of the cup 6 can be selected freely, and the weighing device 1 is configured for weighing a total weight of the cup 6 and the sputum contained in the cup 6. The weight sensor on the weighing device 1 can directly send feedback of the total mass of the weighed cup 6 (including sputum) to the single-chip microcomputer, and the single-chip computer obtains a mass of the sputum through calculation. Through calculation, the sputum mass corresponds to a corresponding addition amount of sputum digestion liquid. The quantitative sample adding pump 5 is controlled by the single-chip microcomputer to add sputum digestion liquid according to the calculated addition amount of sputum digestion liquid, thereby accurately completing quantitative sample addition of sputum digestion liquid, and realizing standardization and automation of addition amount of sputum digestion liquid.

The invention realizes the standardization of addition of the sputum digestion liquid by weighing the sputum, so that the bacteria in the sputum are homogenized better, and the culture positive rate of the actual pathogenic bacteria is greatly improved.

## Claims

1. A sample adding system for automatically adding sputum digestion liquid, **characterized by** comprising a weighing device (1) with a weight sensor and a sample adding device; the sample adding device comprising a sputum digestion liquid reagent bottle (2), wherein a liquid inlet of a sample adding tube (3) goes deep into the sputum digestion liquid reagent bottle (2), a liquid outlet of the sample adding tube (3) extends to a position above the weighing device (1), a sample adding needle (4) is connected to the liquid outlet of the sample adding tube (3), the sample adding tube is equipped with a quantitative sample adding pump (5); a signal output end of the weight sensor is electrically connected to a signal input end of a single-chip microcomputer, and a control output end of the single-chip microcomputer is electrically connected to a control input end of the quantitative sample adding pump (5).

2. The sample adding system for automatically adding sputum digestion liquid according to claim 1, **characterized in that** the weighing device (1) is a balance; and the quantitative sampling adding pump (4) is a plunger pump, a peristaltic pump, a gear pump or a quantitative valve.

3. The sample adding system for automatically adding sputum digestion liquid according to claim 2, **characterized in that** the sample adding needle (6) is a steel needle or a Tip head.
